# EUROPEAN PATENT APPLICATION

(11) **EP 4 137 230 A1**
(43) Date of publication of application: **22.02.2023**
(21) Application number: 22382781.7
(22) Date of filing: 11.08.2022
(51) Int. Cl.: B01J 20/04, B01J 20/08, B01J 20/20, C02F 1/28

(54) **COMPOSITE FOR THE SIMULTANEOUS AND IRREVERSIBLE REMOVAL OF INORGANIC AND ORGANIC CONTAMINANTS IN WATER OR SOIL**

(30) Priority: 20.08.2021 ES 202130802
(71) Applicant: Magnesitas Navarras S.A., 31630 Zubiri (ES); Universidad de Navarra, 31009 Pamplona (Navarra) (ES)
(72) Inventor: Erro Garcés, Javier, 31009 Pamplona (ES); García-Mina Freire, José María, 31009 Pamplona (ES); Martínez Pérez, José Manuel, 31009 Pamplona (ES); Guembe Contreras, Maitane, 31630 Zubiri (ES); García Zubiri, Iñigo Xabier, 31630 Zubiri (ES)
(74) Representative: Pons

(57) **Abstract**

The invention relates to a composite for the removal of inorganic and organic contaminants in soil or water characterised in that it consists of activated carbon and a solid composition comprising an Mg oxide and a layered solid hydroxide made up of an Mg oxide-hydroxide and a trivalent metal selected from Fe(III), AI(III) and a combination thereof, wherein said solid layered hydroxide is located on the surface of the Mg oxide and/or a precursor of said solid layered hydroxide. The percentage by weight of activated carbon in the composite is between 5% and 20%. Furthermore, the invention relates to the method for producing said composite and to the use thereof as a decontaminating agent for the simultaneous and irreversible removal of inorganic and organic contaminants in water or soil media. Therefore, the present invention can fall within the area of soil and water remediation.

## Description

The invention relates to a composite for the removal of inorganic and organic contaminants in soil or water characterised in that it consists of activated carbon and a solid composition comprising an Mg oxide and a layered solid hydroxide made up of an Mg oxide-hydroxide and a trivalent metal selected from Fe(III), AI(III) and a combination thereof, wherein said layered solid hydroxide is located on the surface of the Mg oxide, and/or a precursor of said layered solid hydroxide. Furthermore, the invention relates to the method for producing said composite and to the use thereof as a decontaminating agent for the simultaneous and irreversible removal of inorganic and organic contaminants in water or soil media.

Therefore, the present invention can fall within the area of soil and water remediation.

### BACKGROUND OF THE INVENTION

The industrial development of the last two centuries (19th and 20th centuries), the high population concentration in urban and rural areas, and the, at least partial, lack of awareness about the main environmental problems that said situations could cause, have favoured the presence of contaminants that are harmful to human and/or animal health in the soil and water of said areas and surroundings. Heavy metals and organic molecules have been identified as the main contaminants in soils. Heavy metals include lead (Pb), cadmium (Cd), mercury (Hg) and arsenic (As); and among the organic contaminants certain hydrocarbons, phenols and organochlorine pesticides such as lindane must be mentioned.

Numerous compositions and materials capable of removing inorganic contaminants or degrading organic contaminants can be found in the literature. However, they do not act simultaneously removing a wide range of heavy metals and at the same time degrading polar and non-polar organic contaminants, both in water and soil, in an irreversible manner. Activated carbon is one of them, but in order to be used as an effective reducer, it must be activated by acid components which, in turn, hinder the removal of heavy metals.

Biochar/LDH composite materials are currently taking on special relevance, for example, for the removal of inorganic and organic contaminants from polluted water ("Sustainable wastewater treatment by biochar/layered double hydroxide composites: Progress, challenges, and Outlook" Mukarram et al Bioresource Technology Volume 319, January 2021, 124128 and "Implications of layered double hydroxides assembled biochar composite in adsorptive removal of contaminants: Current status and future perspectives" Meththika Vithanage Ahmed Ashiq Sammani Ramanayaka and Amit Bhatnagar et al Science of The Total Environment Volume 737, 1 October 2020, 139718). However, this type of biochar has been proven to be less effective in the degradation of organic contaminants than other compounds such as activated carbon.

Activated carbon/LDH composites can also be found in the literature ("Tailoring an efficient nanocomposite of activated carbon-layered double hydroxide for elimination of water-soluble dyes" October 2020 Abdullah M. Aldawsari et al Journal of Alloys and Compounds 857(4); *"*Functionalized layered double hydroxide applied to heavy metal ions absorption: A review' Zhen Tang et al Nanotechnology Reviews 2020; 9: 800-819 and "Using of activated carbon derived from agricultural waste coating by layered double hydroxide for copper adsorption" AI Juboury et al Iraqi Journal of Agricultural Sciences 2019:50(5):1446-1454), but the effectiveness thereof in the simultaneous and irreversible removal of organic and inorganic contaminants in water and soil has not been proven. As discussed, activation of activated carbon is required to increase the reducing power thereof ("Enhanced electron transfer and methane production from low-strength wastewater using a new granular activated carbon modified with nano-Fe3O4." Song, Xiangru, et al. Chemical Engineering Journal 374 (2019): 1344-1352; "Review of modifications of activated carbon for enhancing contaminant uptakes from aqueous solutions." Yin, Chun Yang, Mohd Kheireddine Aroua, and Wan Mohd Ashri Wan Daud. Separation and purification technology 52.3 (2007): 403-415. The use of these components of the composite fulfils a coating or carrier function in many cases. Furthermore, in said articles, the composites used are based on nanoparticles, carbonaceous compounds in general or a specific activated carbon obtained from agricultural waste.

Therefore, in order to overcome all the technical problems mentioned, development is required of new composites with simple compositions, that are economically viable and sustainable capable of irreversibly and simultaneously removing a wide range of inorganic and organic contaminants, both in soil and in water.

### DESCRIPTION OF THE INVENTION

In a first aspect, the present invention relates to a composite for the simultaneous and irreversible removal of inorganic and organic contaminants in water or soil (hereinafter "the composite of the present invention") characterised in that it consists of
- a solid composition comprising
   ∘ an Mg oxide, and
   ∘ a solid layered hydroxide made up of an Mg oxide-hydroxide and a trivalent metal selected from Fe(III), AI(III) and a combination thereof, wherein said one layered solid hydroxide is located on the surface of the Mg oxide, and/or a precursor of a layered solid hydroxide made up of an Mg oxide-hydroxide and a trivalent metal selected from Fe(III), AI(III) and a combination thereof, wherein said one layered solid hydroxide is located on the surface of the Mg oxide, and activated carbon,
wherein the percentage by weight of activated carbon in the composite is between 5% and 20%, preferably between 10% and 15%.

In the present invention, "inorganic contaminants" are understood as those heavy metals, with high atomic weight between 63.55 (Cu) and 200.59 (Hg), that can be absorbed and accumulated in living beings and are harmful to human and animal health.

In the present invention, the term "organic contaminant" is understood as those toxic and persistent organic compounds that can accumulate in living organisms.

The composite of the present invention degrades the organic contaminants and simultaneously fixes inorganic contaminants such as heavy metals. Unexpectedly, in the composite of the present invention, the reducing power of the activated carbons is activated, activated carbons which are transformed into strong reducing agents that degrade organic contaminants. This mainly entails an economic and environmental advantage, since by means of a simple and viable remedy, an irreversible remediation of any type of contamination is achieved. The combination of organic and inorganic remediation also entails an increase in the decontaminating effectiveness due to said activation. As such, and using a single application of the composite to the soil or water, any environmental problem concerning water and soil contamination can be solved. This versatility of the composite of the present invention extends its effectiveness to any type of remediation requirement, making the composite universal and, therefore, valid for any type of soil and water.

A second aspect of the invention relates to the method for producing the composite of the present invention (hereinafter "the method of the invention") characterised in that it comprises a step of physically mixing or physical mixing of
- a solid composition comprising
   ∘ an Mg oxide, and
   ∘ a solid layered hydroxide made up of an Mg oxide-hydroxide and a trivalent metal selected from Fe(III), AI(III) and a combination thereof, wherein said one layered solid hydroxide is located on the surface of the Mg oxide, and/or a precursor of a layered solid hydroxide made up of an Mg oxide-hydroxide and a trivalent metal selected from Fe(III), AI(III) and a combination thereof, wherein said one layered solid hydroxide is located on the surface of the Mg oxide, with activated carbon,
at a temperature between 10 °C and 40 °C and at a pressure between 1 atm and 3 atm.

In a preferred embodiment, the method of the present invention is carried out at room temperature and atmospheric pressure (1 atm). Room temperature is understood in the present invention as a temperature between 18 °C and 25 °C. This fact allows the "in situ" use or "in situ" application of the composite of the present invention for the simultaneous and irreversible removal of organic and inorganic contaminants in soil or water.

The composite of the invention can be used as a decontaminating agent. Therefore, another aspect of the present invention relates to the use of the composite of the present invention as a decontaminating agent for water or soil.

The use of the composite of the present invention for the decontamination of contaminated soil or water allows its preferential "in situ" and "ex situ" use.

The term "in situ use" is understood in the present invention as the direct mixing of the composite of the invention with the contaminated soil to be treated or with the contaminated water to be treated for the simultaneous and irreversible removal of inorganic and organic contaminants.

The term "ex situ use" of soils, is understood in the present invention as the extraction of the contaminated soil or contaminated water and the transfer thereof to a safe decontamination site and the subsequent direct mixing of the composite of the present invention with the contaminated soil to be treated or with the contaminated water to be treated.

Another preferred embodiment of the use of the composite of the present invention relates to the use of the composite of the invention for the simultaneous and irreversible removal of inorganic and organic contaminants in water.

In the present invention, the term "water" relates to any body of water including aquatic ecosystems. The present invention is not intended to be restricted by the term "water" to aquatic ecosystems, it also contemplates other water for human use such as swimming pools.

An "aquatic ecosystem" is an ecosystem in a body of water. Communities of organisms that depend on each other and their environment live in aquatic ecosystems. The two main types of aquatic ecosystems are marine and freshwater.

Thus, a more preferred embodiment of the use of the composite of the invention relates to the use of the composite of the present invention for the simultaneous and irreversible removal of inorganic and organic contaminants in aquatic ecosystems.

Lastly, another preferred embodiment of the use of the composite of the invention relates to the use for the simultaneous and irreversible removal of inorganic and organic contaminants in soils.

In the present invention the term "soil" relates to the mixture of organic matter, minerals, gases, liquids and organisms which, overall, sustain life. The land mass of planet Earth, called pedosphere, has four important functions:
- as a medium for plant growth;
- as a medium for water storage, supply and purification;
- as a modifier of the earth's atmosphere;
- as a habitat for organisms.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

### BRIEF DESCRIPTION OF THE FIGURES

**Figure 1****.** (a) Image obtained by scanning electron microscopy of the Mg oxide of the solid composition. (b) Analysis of the surface obtained by means of the energy-dispersive X-ray spectroscopy technique of the surface of the Mg oxide of the solid composition.
**Figure 2****.** Image obtained by scanning electron microscopy of the layered solid hydroxide of the solid composition.
**Figure 3****.** Reduction power of a control, of the Mg oxide of the solid composition (component A), component B and the composite formed by component A and B, determined by means of a ferricyanide assay.
**Figure 4****.** Ppm concentration of Mn, Cu, Ni, Zn, As, Pb and Cd in (a) starting aqueous solution and (b) after 24h of contact between the starting aqueous solution and the composite.
**Figure 5****.** After 24h of contact between the composite and the aqueous solution of heavy metals (a) Image obtained by scanning electron microscopy and (b) Analysis obtained by the energy-dispersive X-ray spectroscopy technique of the surface.
**Figure 6****.** Lindane concentration in ppb in the control solution and after the desorption thereof with cyclohexane-ethyl acetate, in the composite.
**Figure 7****.** Percentage of phenol adsorbed after 3 hours of contact for the activated carbon samples Cact, Leonardite Biochar Bcc and Vegetable Biochar Bcv.
**Figure 8****.** Concentration of the sum of hexachlorocyclohexane isomers in real soil from Sabiñánigo (ppm) at 7, 14, 28 and 50 days from applying 15% of the composite to the soil.
**Figure 9****.** Concentration of the sum of lindane isomers in soil (ppm) in an alkaline soil doped with 500 ppm lindane and 1000 ppm heavy metals (Cu, Mn, Ni, Zn, Cd, As and Pb) from 24 hours to 50 days from the application of 15% of the composite to the soil.
**Figure 10****.** Concentration of soluble heavy metals (ppm) in soil in an alkaline soil doped with 500 ppm lindane and 1000 ppm heavy metals (Cu, Mn, Ni, Zn, Cd, As and Pb) after 24 hours (Figure 10 a) and 50 days (Figure 10 b) from the application of 15% of the composite to the soil.
**Figure 11****.** Ppm concentration of Mn, Cu, Ni, Zn, As, Pb and Cd in aqueous solution after 24h of contact between the starting aqueous solution and 0.1 g of the different types of magnesium oxide tested a) MgO silo, b) magna hydrate MgO, c) reactive caustic MgO, d) MgO PC8 (MgO of the composite of the example) and e) MgO magnetic separation.

### EXAMPLES

Next, the invention will be illustrated by means of assays carried out by the inventors that demonstrate the effectiveness of the product of the invention.

### 1. Production method

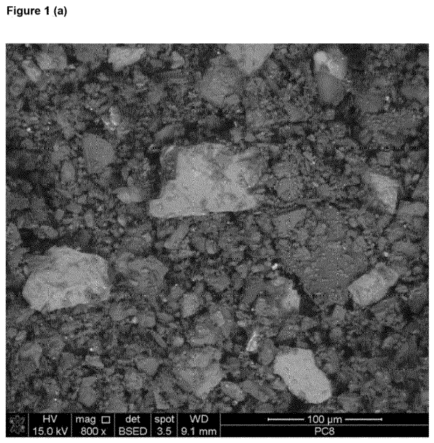

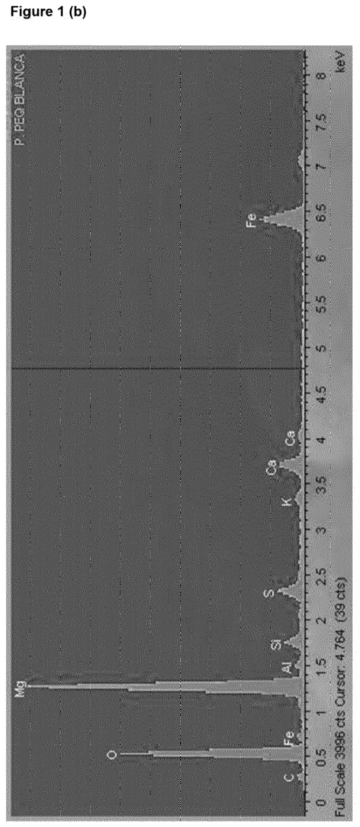

Figure 1 (a) shows an image obtained by scanning electron microscopy of the Mg oxide of the solid composition. (b) Analysis of the surface obtained by means of the energy-dispersive X-ray spectroscopy technique of the surface of the Mg oxide of the solid composition.

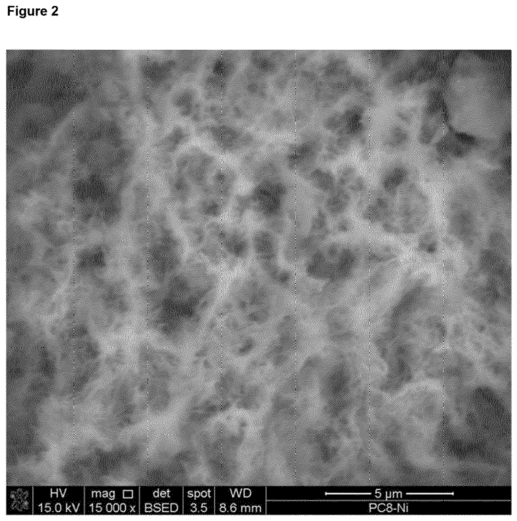

Figure 2 shows an image obtained by scanning electron microscopy of the layered solid hydroxide of the solid composition.

Component B is activated carbon which corresponds to the product characterised by this name and which has a CAS number of 7440-44-0.

The composite is obtained by simple intimate mixing of components A and B (85 - 92.5% of A and 15 - 7.5% of B). This mixture can be made at room temperature (25 °C). The mixture is prepared at atmospheric pressure.

### 2. Reducing power

The reducing power of the composite and of its components A and B separately, was determined by means of a dose-response test with ferricyanide. To that end, components A and B are added separately and the composite is added at 3 doses (70, 350 and 700 ppm) to a solution of 0.25 mM potassium ferricyanide, they are left in the dark for 24 hours and the absorbance at 420 nm is measured.

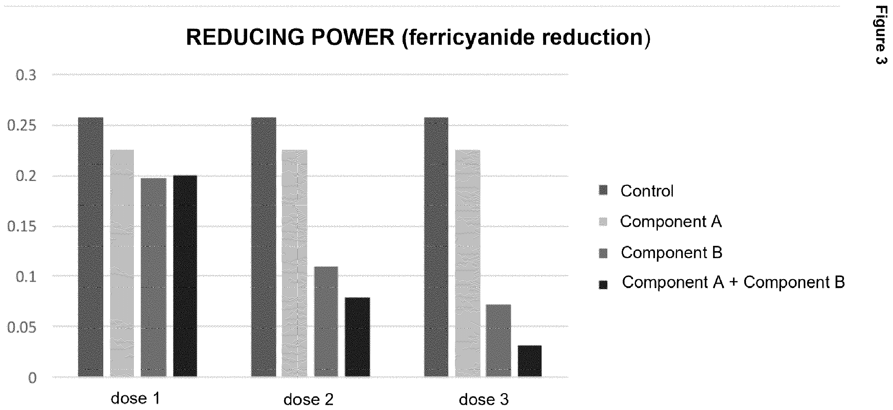

Figure 3 shows the results of the determination of the reduction power by means of a test with ferricyanide for a control without the composite, component A, component B and the composite formed by component A and B.

The results shown in Figure 3 show that while component A has no reducing power, component B does show a reducing nature that increases with the dose, and which, by joining both components in the composite, there is a significant increase in the reducing power of component B. In this way, the synergy obtained by mixing both components in the composite is demonstrated, since the mixture of both composites generates a reducing power greater than that of each component separately. This reinforces the hypothesis of the role of component A as an activator of the reducing power of component B in the composite.

### 3. Feasibility tests for the removal of inorganic and organic contaminants in water

### 3.1 Feasibility tests for the removal of heavy metals in water

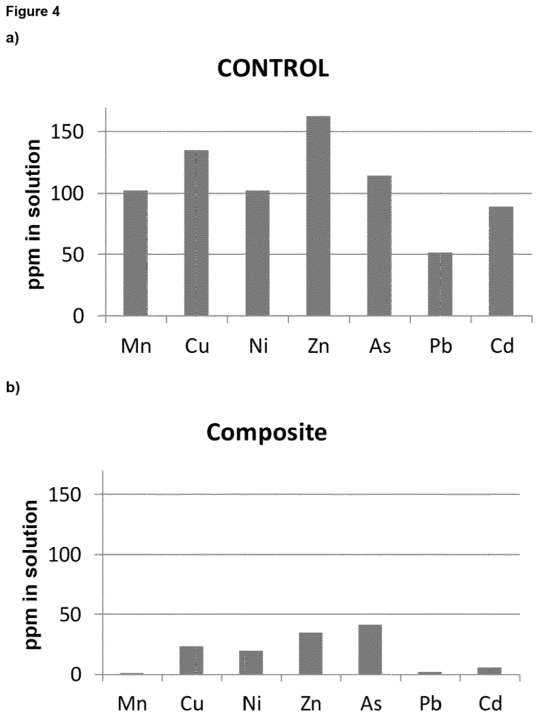

0.1 g of Composite are added to 50 ml of aqueous solution comprising the following heavy metals Mn, Cu, Ni, Zn and to another solution comprising As, Pb and Cd. Figure 4 (a) shows the ppm concentration of each of the metals in the aqueous solution. After 24 hours, the concentration of each of the metals in the aqueous solution is determined (See Figure 4 (b)). Figure 4 (b) shows a decrease in the concentration of metals either completely or greater than 80% in all of them.

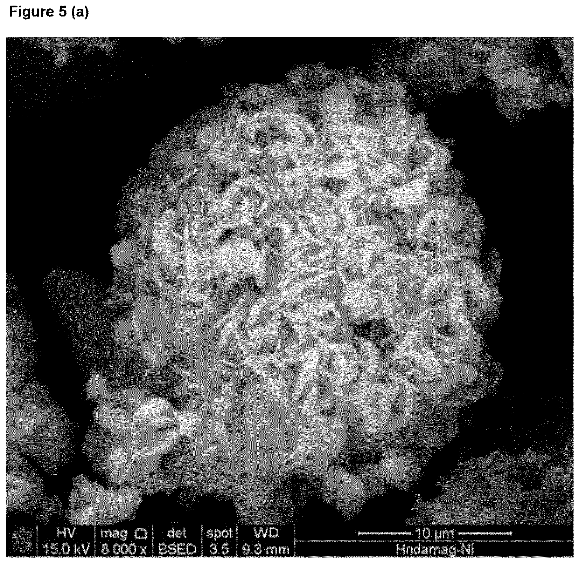

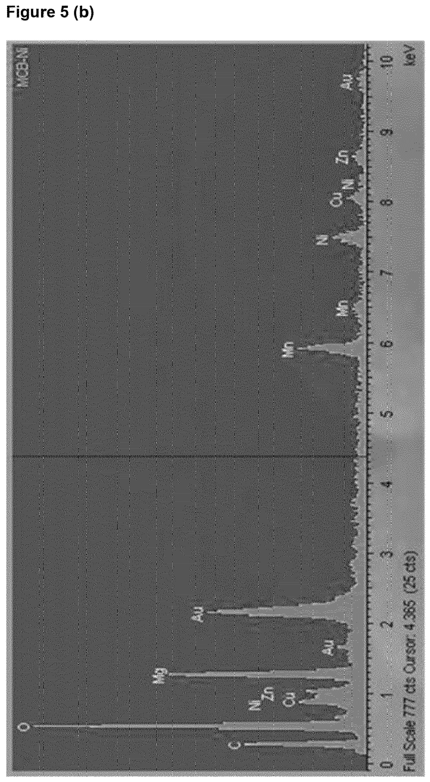

Figure 5 (a) shows an image obtained by scanning electron microscopy (SEM) of Composite after 24h in contact with the aqueous solution of heavy metals (Mn, Cu, Ni, Zn) and Figure 5 (b) a microanalysis obtained by the energy-dispersive X-ray spectroscopy technique of the surface of said Sample 1. Figure 5 (b) shows the peaks corresponding to the heavy metals contained in the treated solution. This result agrees with that obtained when analysing the presence of metals in solution after being treated with the composite (Figure 4b), linking the disappearance of metals from the solution with their presence in the composite.

### 3.2 Feasibility tests for the removal of lindane in water

The composite is added to 200 ml of a lindane aqueous solution (Control).

By way of comparison, components A and B of the composite are added separately to 200 ml of two lindane aqueous solutions (Control), independently.

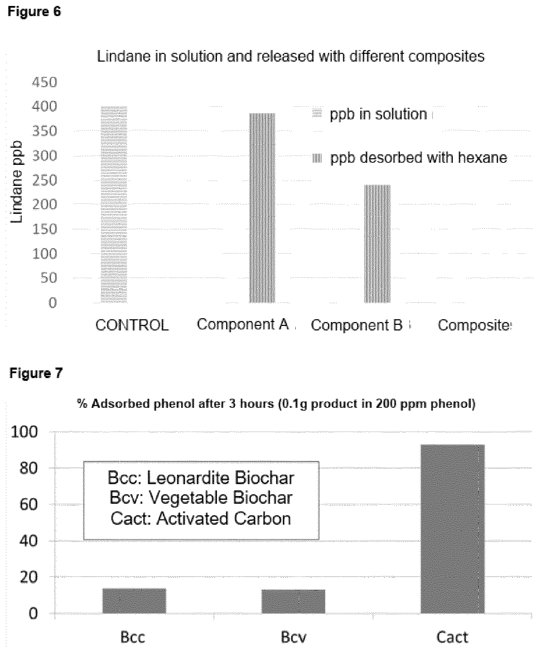

After 7 days, the lindane adsorbed by the composite, and components A and B are extracted with cyclohexane-ethyl acetate. Figure 6 shows the ppb concentration of lindane in the control solution and in the rest of the solutions with the composite, components A and B, after desorption thereof with hexane.

It can be seen how only lindane remains in aqueous solution in the control, so that components A, B and the composite are capable of removing lindane from the medium. The presence of lindane in component A after being desorbed by hexane shows that this removal of lindane by said component was due to an adsorption of lindane on A. The partial desorption of lindane in hexane (60%) with component B indicates both an adsorption and a chemical degradation of lindane in the presence of B. Lastly, the complete absence of lindane desorbed in hexane with the composite indicates the complete and irreversible degradation of the lindane with the composite.

### 3.3 Feasibility tests for the removal of phenol in water

0.1 g of activated carbon are added to 200 ml of an aqueous solution of 200 ppm of phenol.

By way of comparison, 0.1 g of two biochar obtained from different origins are added to 200 ml of two aqueous solutions of 200 ppm of phenol, independently (Bcc Sample and Bcv Sample). Bcc relates to a biochar obtained from leonardite and Bcv relates to a biochar of vegetable origin.

After 3 hours of contact between the samples and the phenol, phenol in solution is determined by measuring the absorbance at 270 nm, and the adsorbed phenol is calculated by the difference.

Figure 7 shows the percentage of phenol adsorbed for activated carbon and biochar. It can be seen how the two biochars are less efficient when it comes to adsorbing phenol compared to the sample comprising activated carbon.

### 4. Feasibility tests for the removal of inorganic and organic contaminants in soils

### 4.1. Test on a soil with a real problem of organic contamination in Sabiñánigo

A 15% dose of the composite is added to 5 kg of soil and compared with another untreated soil. After applying the treatments, it is watered to hydrate the mixture and put it in contact with the contaminant.

The soils are sludge that are part of the Bailín landfill in Sabiñánigo and contain 500 ppm of different hexachlorocyclohexane isomers.

Different samplings are carried out during the test and the hexachlorocyclohexane is extracted into n-hexane to extract the desorbed contaminant. In this way, the concentration of the sum of hexachlorocyclohexane isomers in the soil (ppm) is determined at 7, 14, 28 and 50 days from the application of the composite.

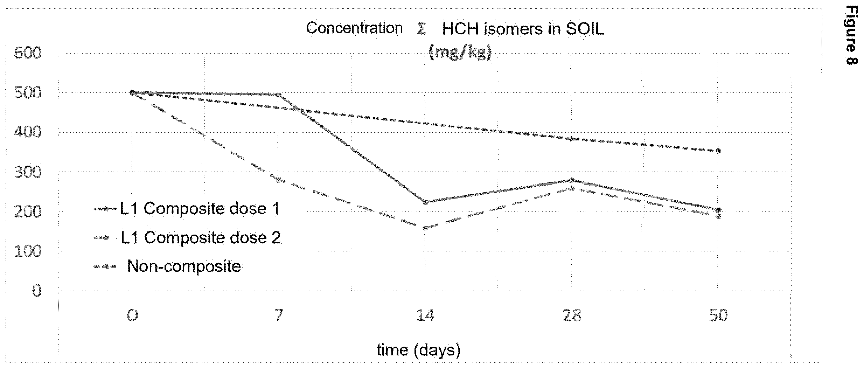

Figure 8 shows the concentration of the sum of hexachlorocyclohexane isomers in real Sabiñánigo soil (ppm) at 7, 14, 28 and 50 days after the application of 15% of the composite to the soil. As can be observed, the composite is capable of removing between 60-70% of the hexachlorocyclohexanes present in the soil, beyond the 20% that disappears over time in the non-composite control.

### 4.2. Test in an alkaline soil doped with lindane and heavy metals for the final study of the simultaneous removal

The composite is applied at a dose of 15% to 15 kg of soil and compared to untreated soil. After applying the treatments, it is watered to hydrate the mixture and put it in contact with the contaminant. The test is carried out on an alkaline soil doped with 500 ppm of lindane and 1000 ppm of heavy metals (Cu, Mn, Ni, Zn, Cd, As and Pb).

Different samplings are carried out during the test and the lindane is extracted in acetonitrile to extract the desorbed contaminant. In this way, the concentration of the sum of lindane in soil (ppm) is determined from 24 hours to 50 days after the application of the composite.

In the same manner, the concentration of heavy metals (Cu, Mn, Ni, Zn, Cd, As and Pb) soluble in soil (ppm) extracted with DTPA, triethanolamine and CaCl₂ is determined.

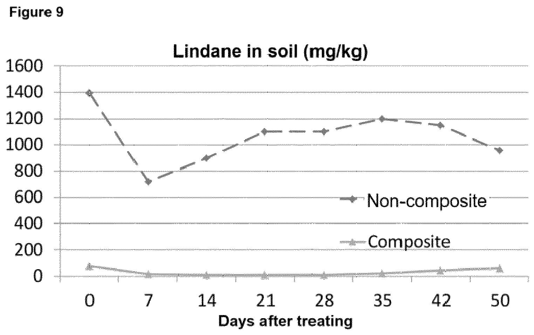

Figure 9 shows the concentration of the sum of lindane isomers in soil (ppm) in an alkaline soil doped with 500 ppm lindane and 1000 ppm heavy metals (Cu, Mn, Ni, Zn, Cd, As and Pb) from 24 hours to 50 days from the application of 15% of the composite to the soil. As can be observed, there is an irreversible and total removal of the lindane present in the soil from the first intake.

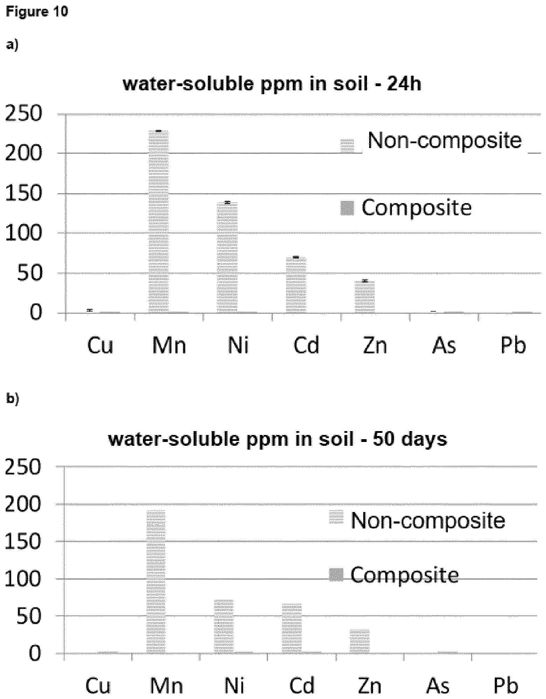

Figure 10 shows the soil-soluble heavy metal concentration (ppm) in an alkaline soil doped with 500 ppm lindane and 1000 ppm heavy metals (Cu, Mn, Ni, Zn, Cd, As and Pb) after 24 hours (Figure 10 a) and 50 days (Figure 10 b) from the application of 15% of the composite to the soil. The results show that the metals that persist in soil solution (Mn, Ni, Cd and Zn) are completely fixed by the composite after 24 hours of application and that said removal from the medium remains stable over time when observing the results at 50 days.

### 5. Comparative data with other magnesium oxides: specificity of the magnesium oxide of the invention

The effectiveness of the Mg oxide of the composite was compared with other magnesium oxides of different origins: MgO silo, magna hydrate MgO, reactive caustic

MgO, MgO PC8 (MgO from the exemplary composite), MgO magnetic separation. 0.1 g of the different types of magnesium oxide were applied to a solution of 100 ppm of Mn, Cu, Ni, Zn, As, Pb and Cd and after 24h of contact, the concentration of metals present in the supernatant was determined.

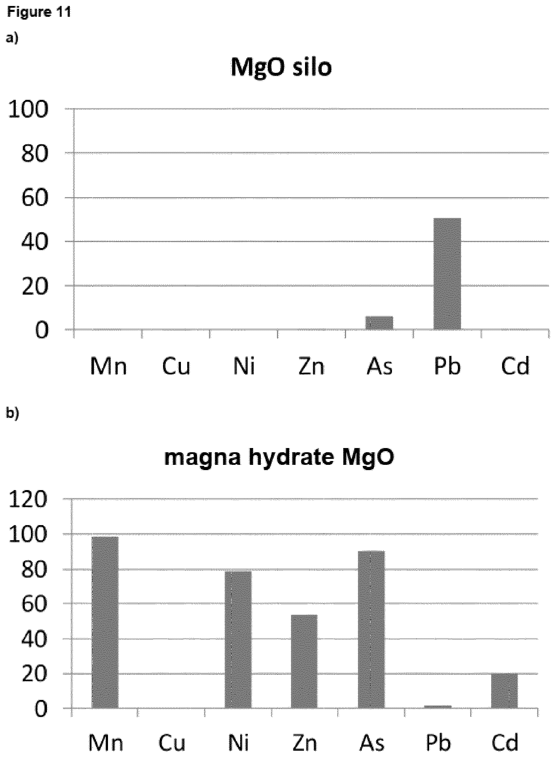

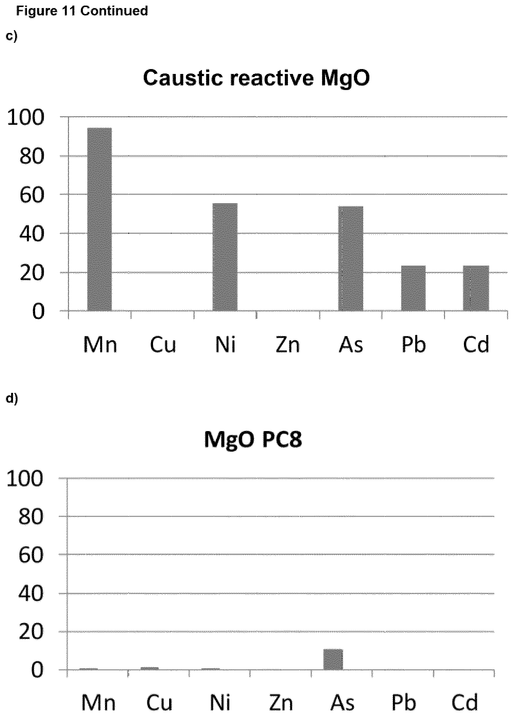

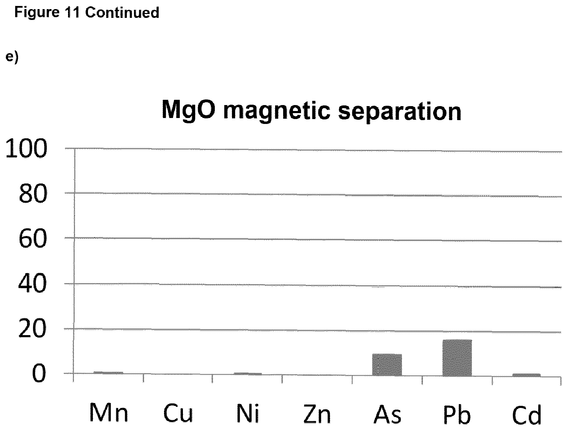

Figure 11 shows the ppm concentration of Mn, Cu, Ni, Zn, As, Pb and Cd in aqueous solution after 24h of contact between the starting aqueous solution and 0.1 g of the different types of magnesium oxide tested. According to said figure, it can be seen how there is a variation in the effectiveness of the different magnesium oxides with the various metals, the magnesium oxide of the composite being the most effective in the essentially complete removal of all metals.

## Claims

1. A composite for the simultaneous and irreversible removal of inorganic and organic contaminants in water or soil, **characterised in that** it consists of
• a solid composition comprising
∘ an Mg oxide, and
∘ a solid layered hydroxide made up of an Mg oxide-hydroxide and a trivalent metal selected from Fe(III), AI(III) and a combination thereof, wherein said one layered solid hydroxide is located on the surface of the Mg oxide, and/or a precursor of a layered solid hydroxide made up of an Mg oxide-hydroxide and a trivalent metal selected from Fe(III), AI(III) and a combination thereof, wherein said one layered solid hydroxide is located on the surface of the Mg oxide,
• and activated carbon,
wherein the percentage by weight of activated carbon in the composite is between 5% and 20%.

2. The composite according to claim 1, wherein the percentage by weight of activated carbon in the composite is between 10% and 15%.

3. A method for producing a composite according to any of claims 1 or 2, **characterised in that** it comprises
a step of physically mixing
• a solid composition comprising
∘ an Mg oxide, and
∘ a solid layered hydroxide made up of an Mg oxide-hydroxide and a trivalent metal selected from Fe(III), AI(III) and a combination thereof, wherein said one layered solid hydroxide is located on the surface of the Mg oxide, and/or a precursor of a layered solid hydroxide made up of an Mg oxide-hydroxide and a trivalent metal selected from Fe(III), AI(III) and a combination thereof, wherein said one layered solid hydroxide is located on the surface of the Mg oxide,
• with activated carbon,
at a temperature between 10 °C and 40 °C and at a pressure between 1 atm and 3 atm.

4. The method according to claim 3, wherein the step of physical mixing is carried out at room temperature and atmospheric pressure.

5. A use of the composite according to any of claims 1 or 2 as a decontaminating agent for water or soil.

6. The use of the composite according to claim 5, wherein said use is in situ or ex situ.

7. The use of the composite according to any of claims 5 or 6 for the simultaneous and irreversible removal of inorganic and organic contaminants in water.

8. The use of the composite according to claim 7 for the simultaneous and irreversible removal of inorganic and organic contaminants in aquatic ecosystems.

9. The use of the composite according to any of claims 5 or 6 for the simultaneous and irreversible removal of inorganic and organic contaminants in soils.
